## Europäisches Patentamt
## European Patent Office
## Office européen des brevets

(19)

(11) Veröffentlichungsnummer: **0 072 993**
A2

(12) **EUROPÄISCHE PATENTANMELDUNG**

(21) Anmeldenummer: 82107409.3

(22) Anmeldetag: 16.08.82

(51) Int. Cl.³: **B 01 D 53/34**

(30) Priorität: 17.08.81 AT 3600/81

(43) Veröffentlichungstag der Anmeldung:
02.03.83 Patentblatt 83/9

(84) Benannte Vertragsstaaten:
BE DE LU NL

(71) Anmelder: Giesinger, Ingo
Dr. Haltmeierstrasse 5
A-6912 Hörbranz(AT)

(72) Erfinder: Giesinger, Ingo
Dr. Haltmeierstrasse 5
A-6912 Hörbranz(AT)

(54) Verfahren zur Rauchgasentschwefelung.

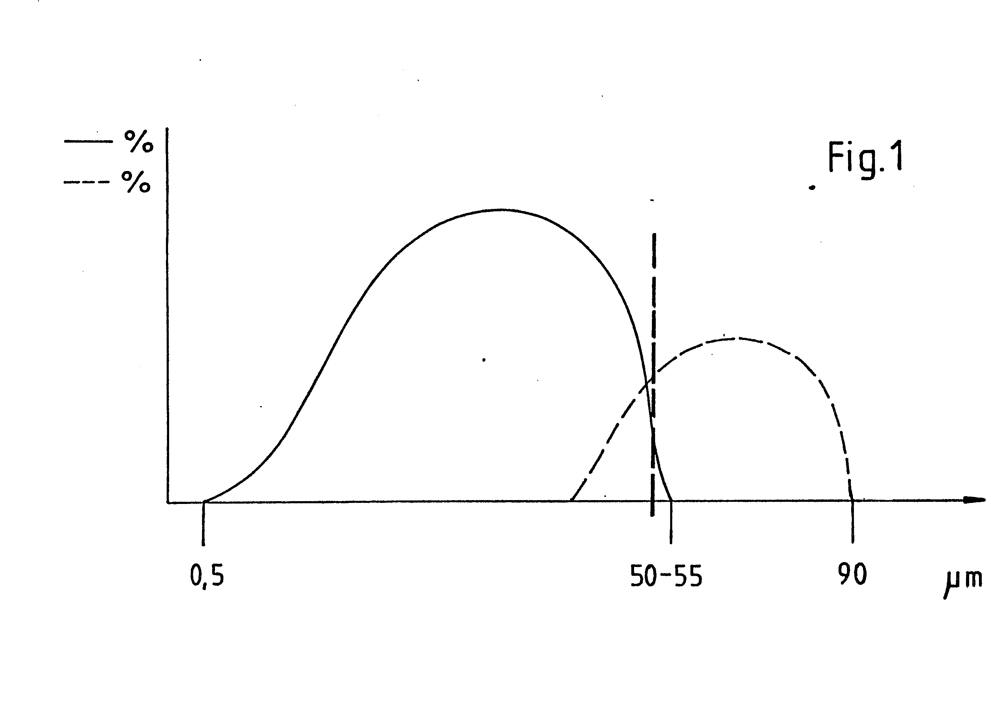

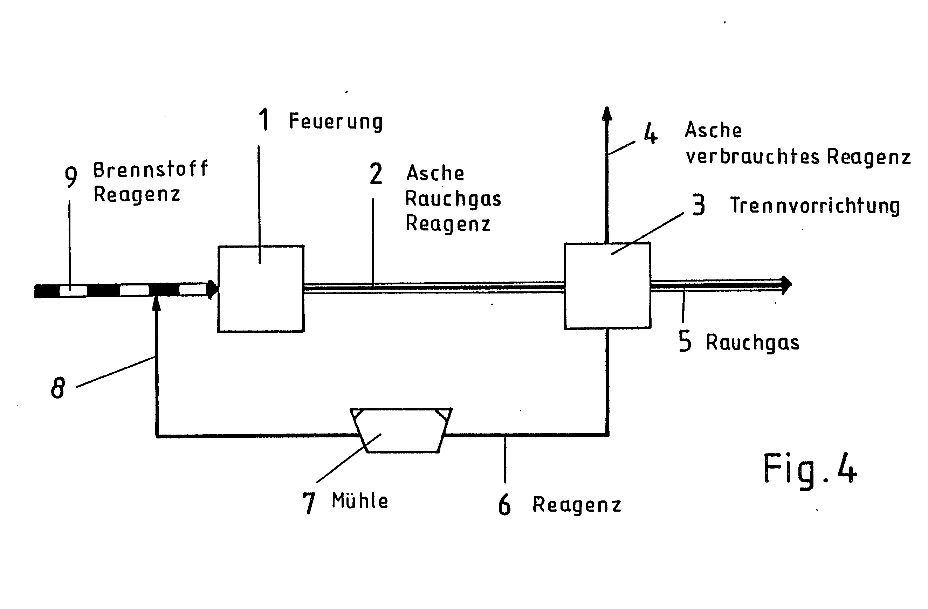

(57) Bei diesem Verfahren zur trockenen Rauchgasentschwefelung werden Reagentien (Kalziumkarbonat, Magnesiumkarbonat, Kalziumoxid, Magnesiumoxid, u.s.w.) mit einer Korngrößenverteilung eingesetzt, deren Maximum entweder bei größeren oder bei wesentlich kleineren Korndurchmessern liegt, als das Maximum der den Kessel verlassenden Flugasche (Fig. 1 u. 2). Durch Wahl geeigneter Trennapparate wird dieses Flugasche - Reagentiengemisch derart getrennt, daß ein überwiegend Flugasche enthaltender und ein überwiegend Reagentien enthaltender Massestrom entsteht. Der überwiegend Reagentien enthaltende Massestrom kann einer industriellen Nutzung zugeführt werden, oder um die Ausnutzung der eingesetzten Reagentien zu erhöhen wieder der Feuerung zugeführt werden. Liegt das Maximum der Korngrößenverteilung der eingesetzten Reagention bei größerem Korndurchmesser als das Maximum der Korngrößenverteilung der Flugasche so ist es vorteilhaft, vor Wiedereinsetzen des überwiegend Reagentien enthaltenden Massestrom, diesen zu mahlen und so eine wesentlich kleinere Korngrößenverteilung zu erhalten. Diese Verfahrensvariante wurde in Fig. 4 zur Darstellung gebracht. Dabei ist zu beachten, daß das Unverbrannte, das bei den großen Korndurchmessern der Korngrößenverteilung der Flugasche zu finden ist, zum Teil wieder der Verbrennung zugeführt wird.

./...

EP 0 072 993 A2

1 Feuerung

9 Brennstoff
Reagenz

2 Asche
Rauchgas
Reagenz

4 Asche
verbrauchtes Reagenz

3 Trennvorrichtung

5 Rauchgas

8

7 Mühle

6 Reagenz

Fig.4

0072993

Verfahren zur Entschwefelung von Rauchgasen

Die Erfindung betrifft ein Verfahren zur Entschwefelung von Rauchgasen von Feuerungen, in welchen fossile Brennstoffe, z.B. Kohle, insbesondere Braunkohle, verfeuert wird, bei dem man in die Feuerung ein Schwefeloxide bindendes Reagens, wie Kalziumoxid oder Magnesiumoxid oder ein sich im Feuerungsraum in eine Schwefeloxide bindendes Reagens umwandelndes Reagens, wie Kalziumkarbonat oder Magnesiumkarbonat, einbringt.

Dieses sogenannte trockene Verfahren zur Rauchgasentschwefelung wird z.B. im Bericht "Rauchgasentschwefelung in Österreich" Studie des Bundesministerium für Gesundheit und Umweltschutz 2/79 von Prof. Dr. A. Hackl in nähren Einzelheiten beschrieben.

Bei der trockenen Rauchgasentschwefelung wird ein Schwefeloxide bindendes Reagens dem Brennstoff vor der Verbrennung beigegeben oder aber direkt in den Feuerungsraum eingebracht, wobei auch die Möglichkeit besteht, daß Reagentien verwendet werden, die sich erst im Feuerungsraum in ein Schwefeloxide bindendes Reagens umwandeln. Das mehr oder weniger stark umgesetzte Reagens wird nach Durchlaufen der Heizflächen in einem Abscheideapparat zusammen mit der Flugasche vom Rauchgas getrennt oder deponiert.

Die Umsetzung des Reagens, also die Bindung von Schwefeloxiden (Schwefeldioxid oder Schwefeltrioxid) erfolgt nicht bis zur vollständigen Erschöpfung des Reagens, so daß für eine bestimmte Entschwefelungsleistung eine überstöchiometrische Menge Reagens in den Feuerungsraum eingebracht werden muß.

Eine nicht vollständige Ausnützung des Reagens ergibt sich unter anderem daraus, daß die Verweilzeit im Feuerungsraum (Reaktionsraum) zu kurz ist.

0072993

Bislang wurde auch das nicht umgesetzte Reagens das noch Kapazität zur Bindung von Schwefeloxiden hat, mit der Flugasche deponiert.

Der Erfindung, wie sie in den Ansprüchen gekennzeichnet ist, liegt die Aufgabe zugrunde, eine Möglichkeit zur Weiterverwendung von nocht nicht erschöpften Reagens zu schaffen.

Erfindungsgemäß wird dies bei einem Verfahren der eingangs genannten Art dadurch erreicht, daß man das Reagens mit einer Korngrößenverteilung verwendet, deren Maximum bei einer anderen Korngröße liegt als das Maximum der Korngrößenverteilung der in den Rauchgasen enthaltenen Flugasche und daß man das Reagens auf Grund der unterschiedlichen Korngrößenverteilung von der Flugasche abtrennt.

Bei Anwendung des erfindungsgemäßen Verfahrens erhält man einen überwiegend aus Reagens und einen überwiegend aus Asche bestehenden Massenstrom. Der überwiegend aus Asche bestehende Massenstrom wird deponiert, wogegen der überwiegend aus Schwefeloxide bindendes Reagens oder in ein solche umwandelbares Reagens enthaltener Massestrom einer gewerblichen Nutzung zugeführt werden kann.

Eine besondere günstige Variante des erfindungsgemäßen Verfahrens besteht darin, daß man das Reagens mit einer Korngrößenverteilung einsetzt, bei welcher einander die Korngrößenverteilungskurven von Flugasche und Reagens überlappen und daß man bei der Trennung den grobkörnigen Anteil der Flugasche mit dem Reagens abtrennt und den feinkörigen Anteil des Reagens in der Flugasche zurückläßt. Bevorzugt wird dabei im Rahmen der Erfindung so vorgegangen, daß man mit dem Reagens den Anteil der Flugasche abtrennt, dessen Korngrößen über der den Schnittpunkt der Korngrößenverteilungskurve von Flugasche und Reagens entsprechenden Korngröße liegen. Bei Anwendung dieses Verfahrens werden die Anteile des Reagens an kleineren Korngrößen, die weitgehend erschöpft sein werden, mit der Flugasche abgetrennt, wohingegen die Anteile des Reagens mit größeren Korngrößen, die insbesondere im Inneren der Einzelteilchen noch nicht erschöpfte Anteile enthalten, abgetrennt werden. Mit diesen Anteilen an Reagens werden auch die gröberen Teilchen der Flugasche abgetrennt, die zu einem nicht unerheblichen Teil noch nicht verbrannten Brennstoff enthalten.

Gemäß einer Variante des erfindungsgemäßen Verfahrens führt man das abgetrennte Reagens, das zum Teil auch noch nicht verbrannten Brennstoff enthalten kann, wieder in die Feuerung ein. Hiebei erweist es sich als vorteilhaft, das abgetrennte Reagens vor dem Wiedereinführen in die Feuerung auf eine Korngrößenverteilung mit einem Maximum zu zerkleinern, das bei kleineren Korngrößen liegt als das Maximum der Korngrößenverteilung der Flugasche. Durch diese Zerkleinerung vor dem Wiedereinführen in den Feuerungsraum werden neue Oberflächen für die Reaktion der Bindung der Schwefeloxide an das Reagens geschaffen und gegebenenfalls vorhandene, noch nicht verbrannte Brennstoffteilchen ebenfalls zerkleinert, wodurch deren Verbrennung begünstigt wird.

Weitere Einzelheiten der Erfindung ergeben sich aus der nachstehenden Beschreibung unter Bezugnahme auf die Zeichnungen und aus den Unteransprüchen. Es zeigt: Fig. 1 bis 3 nicht maßstäbliche Korngrößen-Häufigkeits-Diagramme und Fig. 4 eine Anlage zur Durchführung einer Ausführungsform des erfindungsgemäßen Verfahrens.

Fig. 1 zeigt ein Beispiel für eine Korngrößenverteilung der im Rauchgas enthaltenen Feststoffe, wie sie beispielsweise bei der Verfeuerung von Braunkohle anfallen, wenn man das erfindungsgemäße Verfahren zur Entschwefelung verwendet. Bei diesem Verfahrensbeispiel wurde als Reagens Kalziumkarbonat mit einem Maximum der Korngrößenverteilung bei etwa 90 $\mu$ eingesetzt, wobei sich das Kalziumkarbonat im Feuerungsraum unter Abspaltung von Kohlendioxid in Kalziumoxid umwandelt, welches die Schwefeloxide des Rauchgases bindet. Die Korngrößenverteilungskurve des Reagens, wie es im Rauchgas enthalten ist, ist in Fig. 1 strichliert eingezeichnet und besitzt, wie erwähnt, ein Maximum bei etwa 90 $\mu$.

Die Flugasche, wie sie im Rauchgas enthalten ist, besitzt die in Fig. 1 in ausgezogener Linie eingezeichnete Korngrößenverteilungskurve mit einem Maximum bei etwa 50 - 55 $\mu$ und einem Feinstkornanteil mit einer Korngröße von etwa 0,5 $\mu$ (es versteht sich, daß die genannten Korngrößen und auch die Form der Korngrößenverteilungskurven, wie sie vorstehend erwähnt und auch im folgenden noch erwähnt werden, ausschließlich als Beispiele aufzufassen sind).

Es ist ersichtlich, daß das Maximum der Korngrößenverteilungskurce des Reagens bei größeren Korngrößen liegt als das Maximum der Korngrößenverteilungskurve der Flugasche. Weiters wurde bei diesem Beispiel das Reagens in einer Korngröße verwendet, welche eine Überlappung der beiden Korngrößenverteilungskruven zur Folge hat. Der Trennschnitt bei der Auftrennung der in der Flugasche enthaltenen Feststoffe in einen überwiegend Asche und ein überwiegend Reagens enthaltenen Anteil ist in Fig. 1 durch die vertikale, strichlierte Linie angedeutet. Die Lage des Trennschnittes ist so gewählt, daß die kleinere Korngrößen enthaltenden Anteile des Reagens mit der Flugasche deponiert werden, wogegen die gröberen Anteile der im Rauchgas enthaltenen Feststoffe, nämlich das Reagens und die gröbsten Anteile der Flugasche, welche noch nicht ganz verbrannte Brennstoffteilchen (was z.B. bei Verwendung von Braunkohle als Brennstoff der Fall sein wird) enthalten, abgetrennt werden. Das Verwerfen der feinsten Teile des Reagens ist kein Nachteil, da die Schwefeloxid-Bindungskapazität dieser Feinstanteile in der Regel erschöpft ist.

- 5 -

0072993

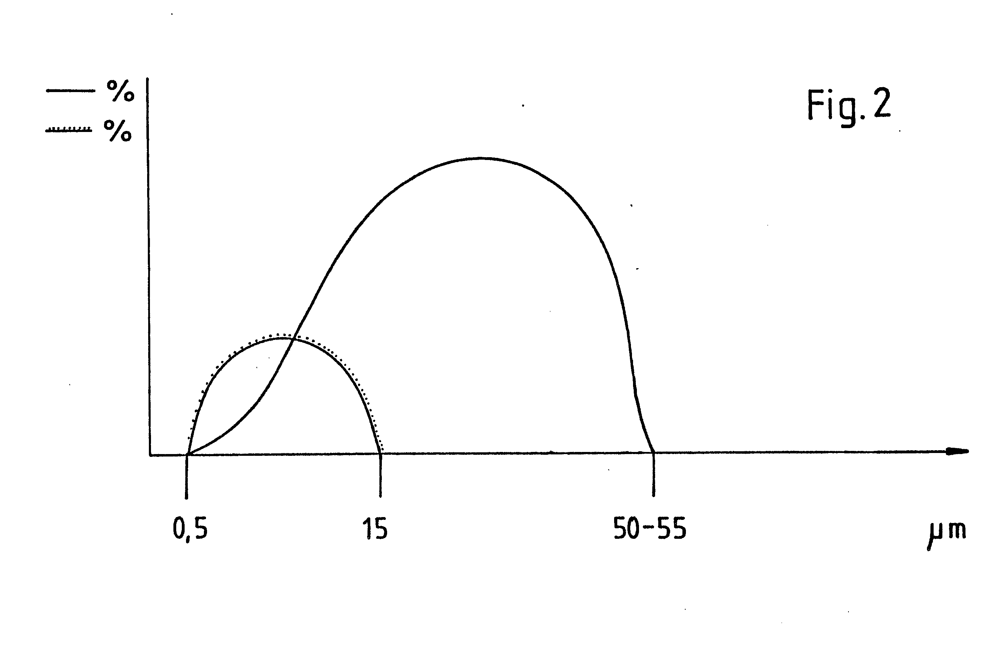

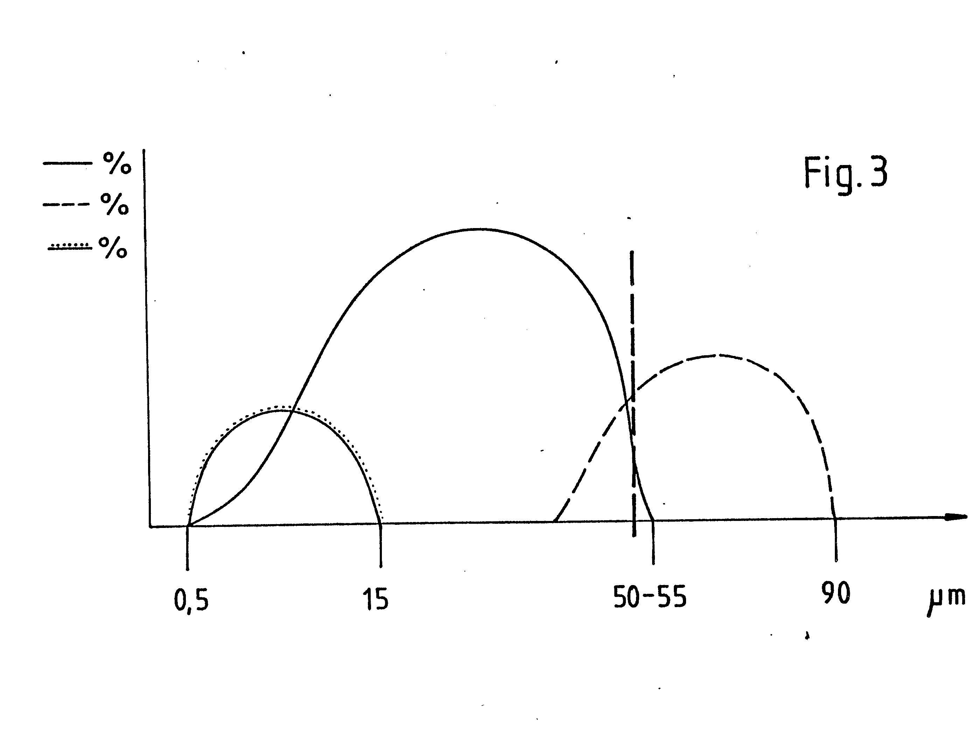

Wie aus Fig. 2 ersichtlich, muß die Korngröße des Reagens nicht bei größeren Korngrößen liegen als das Maximum der Korngrößenverteilungskurve der Flugasche, sondern kann auch bei kleineren Korngrößen liegen, solange nur das Maximum der Korngrößenverteilungskurve des Reagens innerhalb der Korngrößenverteilungskurve der Flugasche liegt. Beim in Fig. 2 gezeichneten Beispiel liegt die Korngröße des Reagens bei etwa 15 $\mu$. In dem Diagramm der Fig. 3 ist die Möglichkeit wiedergegeben, beim erfindungsgemäßen Verfahren die von der Flugasche in der an Hand von Fig. 1 beschriebenen Art und Weise abgetrenntes Reagens, das noch größere Brennstoffteilchen enthalten kann, wieder in den Feuerungsraum einzuführen, wobei bevorzugt vor der Einführung in den Feuerungsraum eine Aufbereitung durch Zerkleinerung (Mahlen) vorgenommen wird. Man erhält dann die in Fig. 3 wiedergegebenen Korngrößenverteilungskurven der im Rauchgas enthaltenen Feststoffe.

In der Trennstufe werden nun die Anteile der in der Flugasche enthaltenen Feststoffe der Korngrößen über dem Trennschnitt (lotrechte Linie in Fig. 1) liegen, abgetrennt und nach Wiederaufbereitung erneut in den Feuerungsraum eingeführt, wogegen die überwiegend Asche und verbrauchtes Reagens enthaltenden Anteile mit Korngrößen unterhalb des Trennschnittes deponiert werden.

In Fig. 4 ist schematisch eine Anlage zur Durchführung des soeben beschriebenen Verfahrens gezeigt. In eine Feuerung 1 wird über eine Zufuhrleitung 9 der Brennstoff- und Reagensstrom eingebracht. Mit Flugasche und Reagens beladenes Rauchgas gelangt über die Leitung 2 in einen ein- oder mehrstufigen Trennapparat 3 oder eine Serie von Trennapparaten, wobei das Rauchgas über 5 abgegeben wird. Die Trennvorrichtung, die beispielsweise (Spiral-) Windsichter, Siebe oder Filter sein können, trennen die Feststoffe in einen Massestrom 4 aus Asche und verbrauchtes Reagens einerseits und einen überwiegend Reagens enthaltenden Massestrom, der über die Leitung 6 zu einer Zerkleinerungsvorrichtung 0072993
einer Mühle 7, geführt wird. Über die Leitung 8 wird
das zerkleinerte (gemahlene) Reagens wieder dem Brennstoff- und Reagensstrom zugemischt.

Es wird also in die Zufuhrleitung 9 - oder gemäß einer
nicht gezeigten Variante auch unmittelbar in die
Feuerung - der vom Trennapparat 3 abgetrennte Reagens
und ggf. Brennstoff enthaltende Massestrom eingeführt.

Patentansprüche

1. Verfahren zur Entschwefelung von Rauchgasen von Feuerungen, in welchen fossile Brennstoffe, z.B. Kohle, insbesondere Braunkohle, verfeuert wird, bei dem man in die Feuerung ein Schwefeloxide bindendes Reagens, wie Kalziumoxid oder Magnesiumoxid oder ein sich im Feuerungsraum in ein Schwefeloxide bindendes Reagens umwandelndes Reagens, wie Kalziumkarbonat oder Magnesiumkarbonat, einbring, dadurch gekennzeichnet, daß man das Reagens mit einer Korngrößenverteilung verwendet, deren Maximum bei einer anderen Konrgröße liegt als das Maximum der Korngrößenverteilung der in den Rauchgasen enthaltenen Flugasche und daß man das Reagens auf Grund der unterschiedlichen Korngrößenverteilung von der Flugasche abtrennt.

2. Verfahren nach Anspruch 1, dadurch gekennzeichnet, daß man das Reagens mit einer Korngrößenverteilung verwendet, deren Maximum bei größeren Korngrößen liegt als das Maximum der Korngrößenverteilung der Flugasche.

3. Verfahren nach Anspruch 1 oder 2, dadurch gekennzeichnet, daß man das Reagens mit einer Korngrößenverteilung einsetzt, bei welcher einander die Korngrößenverteilungskurven von Flugasche und Reagens überlappen und daß man bei der Trennung den grobkörnigen Anteil der Flugasche mit dem Reagens abtennt und den feinkörnigen Anteil des Reagens in der Flugasche zurückläßt.

4. Verfahren nach Anspruch 3, dadurch gekennzeic 0072993
daß man mit dem Reagens den Anteil der Flugasche abtrennt, dessen Korngrößen über der den Schnittpunkt der
Korngrößenverteilungskurve von Flugasche und Reagens
entsprechenden Korngröße liegen.

5. Verfahren nach einem der Ansprüche 1 bis 4, dadurch gekennzeichnet, daß man das abgetrennte Reagens
wieder in die Feuerung einführt.

6. Verfahren nach Anspruch 5, daß man das abgetrennte
Reagens vor dem Wiedereinführen in die Feuerung auf eine
Korngrößenverteilung mit einem Maximum zerkleinert, das
bei kleineren Korngrößen liegt als das Maximum der Korngrößenverteilung der Flugasche.

7. Verfahren nach Anspruch 1, dadurch gekennzeichnet,
daß man das Reagens mit einer Korngrößenverteilung verwendet, deren Maximum bei einer Korngröße liegt, die
kleiner ist als die dem Maximum der Korngrößenverteilung der Flugasche entsprechende Korngröße und größer
ist als die kleinste der in der Flugasche vorkommende
Korngröße.

Fig.1

0072993

Fig. 2

Fig. 3

0072993

1 Feuerung

9 Brennstoff
Reagenz

2 Asche
Rauchgas
Reagenz

4 Asche
verbrauchtes Reagenz

3 Trennvorrichtung

8

5 Rauchgas

7 Mühle

6 Reagenz

Fig.4

007299